# EUROPEAN PATENT APPLICATION

(11) **EP 4 538 020 A1**
(43) Date of publication of application: **16.04.2025**
(21) Application number: 23819484.9
(22) Date of filing: 07.04.2023
(51) Int. Cl.: B29C 63/36, B29C 65/48, F16L 1/00

(54) **BRANCH PIPE LINING MATERIAL AND MANUFACTURING METHOD THEREOF**

(30) Priority: 09.06.2022 JP 2022093550
(71) Applicant: Shonan Gosei-Jushi Seisakusho K.K., Kanagawa 254-0807 (JP)
(72) Inventor: KAMIYAMA, Takao, Hiratsuka-shi, Kanagawa 254-0807 (JP); KAMIYAMA, Kazuhiro, Hiratsuka-shi, Kanagawa 254-0807 (JP); KATSUMATA, Hironobu, Hiratsuka-shi, Kanagawa 254-0807 (JP); ISHIDA, Makoto, Hiratsuka-shi, Kanagawa 254-0807 (JP)
(74) Representative: Schön, Christoph
(86) International application number: PCT/JP2023/014323
(87) International publication number: WO 2023/238497

(57) **Abstract**

A tubular resin absorbing material has one end that is folded and the one end has a distal end portion being cut into to form a plurality of separate pieces 10c separated in a petal-like arrangement. The separate pieces are arranged in a ring-shaped concave portion formed in a lower flange 30 made of a thermoplastic resin. The lower flange 30 is attached to an upper flange 20 made of a thermoplastic resin in full contact, and the separate pieces are sandwiched between the upper flange and the lower flange. The upper flange, the lower flange, and the separate pieces are bonded to with an adhesive 40 applied on the concave portion of the lower flange to prepare an integrated lateral pipe lining material.

## Description

### Technical Field

The present disclosure relates to a lateral pipe lining material used for rehabilitation of lateral pipes lateraling off from a main pipe and a method of producing the lateral pipe lining material.

### Background Art

For rehabilitation of lateral pipes lateraling off from a main pipe of sewerage and the like, lateral pipe lining materials are used that are made of a tubular flexible resin absorbing material being impregnated with a curing resin and have one end folded outward to form a flange portion. In such a lateral pipe lining material, the flange portion closely contacts the periphery of a lateral pipe opening in the main pipe to cause a reverse pressure to be applied and the lining material to be inserted into the lateral pipe toward the ground surface. When the lateral pipe lining material is inserted into the lateral pipe, the curing resin is cured to cause the lateral pipe to have an inner circumferential surface being lined and repaired.

PTL 1 describes a lateral pipe lining material in which a ring-shaped concave portion is formed, a sealing collar to closely contact the periphery of a lateral pipe opening in a main pipe is provided, and one end of a tubular resin absorbing material is extended to cause the extended end portion to closely contact the concave portion of the sealing collar.

PTL 2 describes a lateral pipe lining material in which an end of a tubular resin absorbing material is similarly extended and the extended end portion is sandwiched by two flange members for fixation.

PTL 3 describes a lateral pipe lining material in which a folded area of a tubular resin absorbing material is extended on a curved flange to closely contact the periphery of a lateral pipe opening in a main pipe and the extended distal end portion and the flange are bonded with an adhesive.

### Citation List

### Patent Literature

PTL 1: JP H8-504253 A
PTL 2: JP 2000-037777 A
PTL 3: JP 2011-156689 A

### Summary of Invention

### Technical Problem

In order to increase the full contact properties between the sealing collar and the tubular resin absorbing material, the lateral pipe lining material described in PTL 1 has to greatly extend the one end of the tubular resin absorbing material to closely contact the concave portion of the sealing collar and has a problem that the sealing collar and the tubular resin absorbing material cannot be firmly bonded.

Meanwhile, in order to prevent the extended end portion of the tubular resin absorbing material from being flattened between the two flange members, the lateral pipe lining material described in PTL 2 has a problem that the flange members have to be in a complex shape, such as the space between the flange members are equal to the thickness of the tubular resin absorbing material.

The lateral pipe lining material described in PTL 3 has a problem that the bonding is not firm because the folded area of the tubular resin absorbing material is extended on the flange closely contacting the periphery of the lateral pipe opening in the main pipe and then the flange and the extended distal end portion are simply bonded with the adhesive.

The present invention has been made to solve these problems and it is an object thereof to provide a lateral pipe lining material allowing firm bonding of a tubular resin absorbing material to a flange attached to periphery of a lateral pipe opening in a main pipe and also allowing production by a simple method and to provide a production method of the lateral pipe lining material.

### Solution to Problem

The present invention (Claim 1) is a tubular lateral pipe lining material to be inserted into a lateral pipe through a lateral pipe opening in a main pipe, including:
a tubular resin absorbing material being capable of being impregnated with a curing resin and having one end folded outward, the one end having a distal end portion provided with a plurality of separate pieces separated in a petal-like arrangement;
a first curved flange made of a thermoplastic resin provided with an opening formed in a central area to fit the tubular resin absorbing material and with a ring-shaped concave portion provided at an outer edge of the opening to arrange the separate pieces; and
a second flange made of a thermoplastic resin provided with an opening formed in a central area to fit the tubular resin absorbing material and having an inner side surface curved to closely contact an outer surface of the first flange, wherein
the second flange is attached to the first flange in full contact to sandwich the separate pieces of the tubular resin absorbing material arranged in the concave portion of the first flange, and the first and second flanges are bonded to the separate pieces with an adhesive applied on the concave portion of the first flange in which the separate pieces of the tubular resin absorbing material are arranged.

The present invention (Claim 6) is a method of producing a tubular lateral pipe lining material to be inserted into a lateral pipe through a lateral pipe opening in a main pipe, the method comprising the steps of:
forming a plurality of separate pieces separated in a petal-like arrangement by folding outward one end of a tubular resin absorbing material and cutting into a distal end portion of the one end;
fitting the tubular resin absorbing material into an opening formed in a central area of a curved first flange made of a thermoplastic resin and also arranging the separate pieces of the tubular resin absorbing material in a ring-shaped concave portion formed at an outer edge of the opening;
applying an adhesive on the concave portion of the first flange in which the separate pieces are arranged;
sandwiching the separate pieces of the tubular resin absorbing material between the first and second flanges by fitting the tubular resin absorbing material into an opening formed in a central area of a second flange made of a thermoplastic resin and having an inner side surface curved to closely contact an outer surface of the first flange and also by attaching the second flange to the first flange in full contact; and
bonding the first and second flanges to the separate pieces with the adhesive.

### Advantageous Effects of Invention

The present invention causes the separate pieces of the tubular resin absorbing material to be sandwiched by the flanges made of a thermoplastic resin from both sides and to be bonded to both flanges with an adhesive, and allows firm bonding between the flanges and the tubular resin absorbing material and thus production of an integrated lateral pipe lining material. In addition, the flanges are prepared with a thermoplastic resin, allowing the flanges to be mass produced separate from the tubular resin absorbing material and the lateral pipe lining material to be mass produced in a short time.

### Brief Description of the Drawings

Fig. 1 is a perspective view illustrating a tubular resin absorbing material of a lateral pipe lining material.
Fig. 2 is a perspective view illustrating an upper flange to be bonded to the tubular resin absorbing material.
Fig. 3a is a top view of the upper flange.
Fig. 3b is a cross-sectional view of the upper flange taken along line A-A illustrated in Fig. 3a.
Fig. 3c is a cross-sectional view of the upper flange taken along line B-B illustrated in Fig. 3a.
Fig. 4 is a perspective view illustrating a lower flange to be bonded to the tubular resin absorbing material.
Fig. 5a is a top view of the lower flange.
Fig. 5b is a cross-sectional view of the lower flange taken along line C-C illustrated in Fig. 5a.
Fig. 5c is a cross-sectional view of the lower flange taken along line D-D illustrated in Fig. 5a.
Fig. 6 is a drawing illustrating an arrangement surface of separate pieces of the tubular resin absorbing material arranged in a concave portion of the lower flange.
Fig. 7 is a cross-sectional view illustrating a state where the separate pieces of the tubular resin absorbing material are arranged in the concave portion of the lower flange.
Fig. 8 is a cross-sectional view illustrating a state where an adhesive is applied on the concave portion of the lower flange.
Fig. 9 is a cross-sectional view illustrating a state where the upper flange is attached to the lower flange.
Fig. 10 is a cross-sectional view illustrating a state where the upper flange is attached to the lower flange in full contact.
Fig. 11 is a cross-sectional view illustrating a state where a sealing material is attached to an outer surface of the upper flange.

### Description of Embodiments

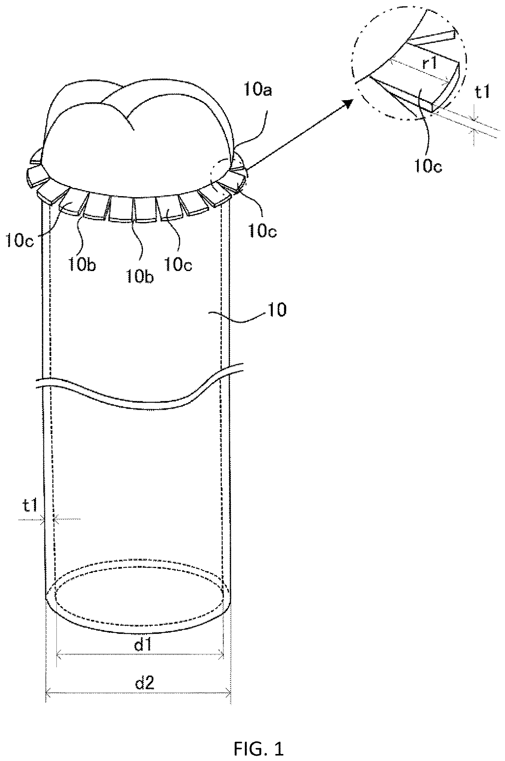

Fig. 1 is a perspective view illustrating a flexible tubular resin absorbing material 10 constituting a major portion of a lateral pipe lining material. The tubular resin absorbing material 10 is made of a nonwoven fabric of polyester, polypropylene, nylon, acryl, vinylon, and the like and has an outer circumferential surface with a heat-sealed air tight plastic film of polyurethane, polyethylene, and the like. The tubular resin absorbing material 10 may have a columnar shape with a thickness t1, an inner diameter d1, and an outer diameter d2. In addition, the tubular resin absorbing material 10 may also be in an elliptical shape or in a state of being folded flat.

The tubular resin absorbing material 10 allows impregnation with a liquid thermosetting resin, such as an unsaturated polyester resin, a vinyl ester resin, and an epoxy resin. Instead of or together with the thermosetting resin, the tubular resin absorbing material 10 may be impregnated with a photocurable resin that is cured by ultraviolet irradiation.

The tubular resin absorbing material 10 has one end from which a plastic film is peeled off covering an outer periphery of a distal end portion 10a of the one end, and the distal end portion 10a is cut into the direction where the tubular resin absorbing material extends and thus a plurality of cut lines 10b are formed at appropriate intervals over the entire periphery of the distal end portion 10a. When the one end of the tubular resin absorbing material 10 is folded outward to extend the distal end portion 10a outward, the cut lines 10b are separated and thus a plurality of separate pieces 10c are formed over the entire periphery as illustrated in an enlarged view of Fig. 1, the separate pieces 10c being separated in a petal-like arrangement and having the thickness t1 same as the tubular resin absorbing material 10 and a radial length r1.

The tubular resin absorbing material 10 has the separate pieces 10c bonded to an upper flange 20 and a lower flange 30 as described later to form the lateral pipe lining material.

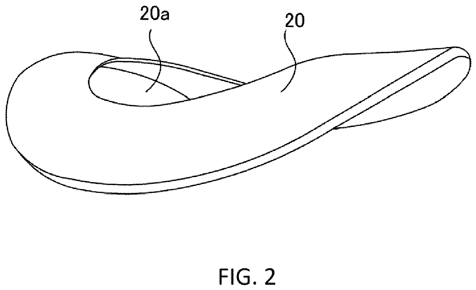

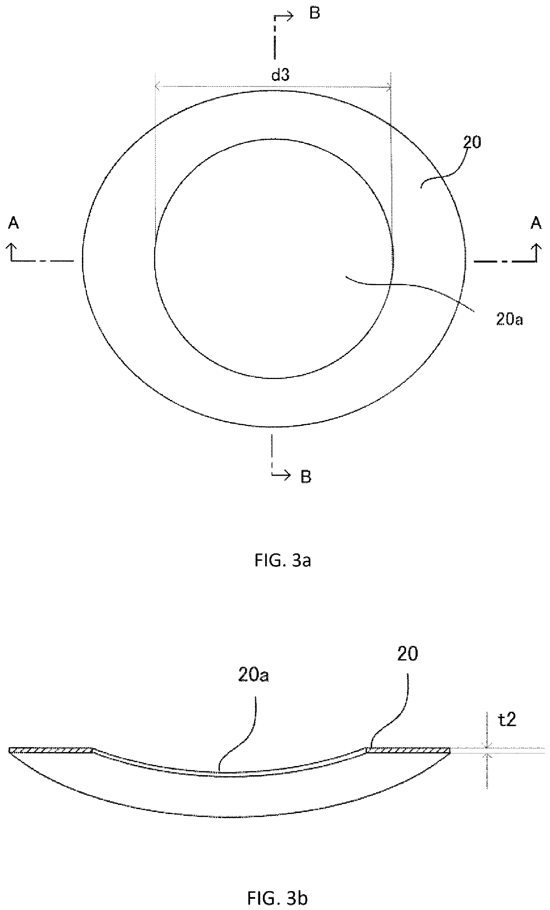

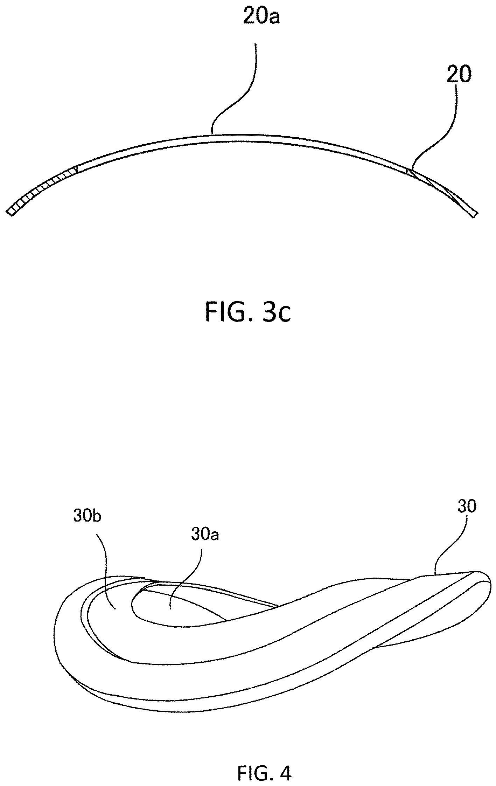

Figs. 2 and 3a through 3c illustrate the shape of the upper flange 20. The upper flange 20 has a thickness t2 and is mass produced, separate from tubular resin absorbing material 10, by a plastic injection molding method (injection molding method) or another plastic molding method using a hard thermoplastic resin, such as vinyl chloride (PVC), or a material prepared by adding an inorganic filler to the hard thermoplastic resin.

The upper flange 20 has an upper surface as a curved surface that is curved in an arc shape having a curvature in accordance with an inner side surface at the periphery of a lateral pipe opening to closely contact the periphery of the lateral pipe opening and has a main pipe longitudinal (horizontal direction in Fig. 3a) length slightly longer than a main pipe circumferential (vertical direction in Fig. 3a) length. The upper flange 20 is provided with a circular opening 20a formed in a central area, the opening 20a having a diameter d3 same as or slightly larger than the outer diameter d2 when the tubular resin absorbing material 10 is in a columnar shape by folding outward the one end of the tubular resin absorbing material 10, to allow the tubular resin absorbing material 10 in the columnar shape to be fit in the opening 20a.

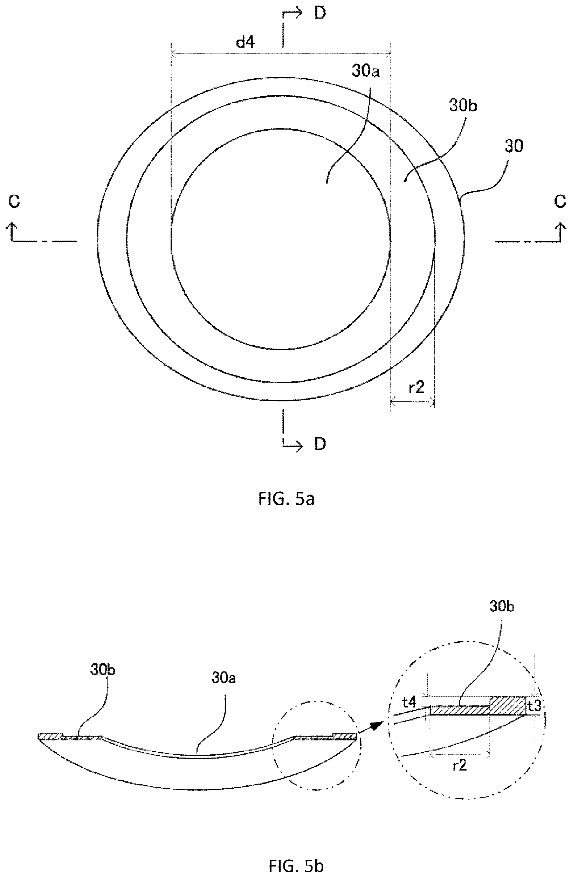

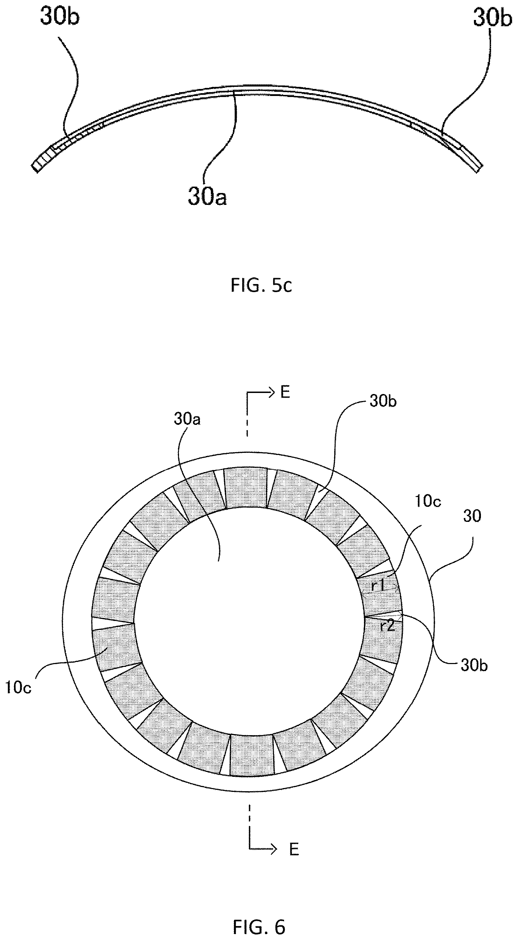

Figs. 4 and 5a through 5c illustrate the shape of the lower flange 30. The lower flange 30 is mass produced with the same material as the upper flange 20 and in the same method as the upper flange 20 separate from the tubular resin absorbing material 10.

The lower flange 30 has a thickness t3 larger than the thickness t2 of the upper flange 20 and has an upper surface that is curved with a curvature in accordance with the inner side surface of the upper flange 20 and has a shape allowing attachment to the inner surface side of the upper flange 20 in full contact. The lower flange 30 also has a main pipe longitudinal (horizontal direction in Fig. 5a) length slightly longer than a main pipe circumferential (vertical direction in Fig. 5a) length. The lower flange 30 is provided with a circular opening 30a formed in a central area, the opening 30a having a diameter d4 same as or slightly larger than the inner diameter d1 when the tubular resin absorbing material 10 is in a columnar shape by folding outward the one end of the tubular resin absorbing material 10, to allow the tubular resin absorbing material 10 in the columnar shape to be fit in the opening 30a.

The lower flange 30 is also provided with a concave portion 30b with a radial length r2 formed in a ring shape over the entire periphery of an outer edge of the opening 30a. Fig. 5b illustrates an enlarged view of a cross-sectional shape of the concave portion 30b. The radial length r2 of the concave portion 30b is equivalent to the radial length r1 of each separate piece 10c of the tubular resin absorbing material 10 illustrated in Fig. 1, and the separate pieces 10c of the tubular resin absorbing material 10 are allowed to be arranged in the concave portion 30b of the lower flange 30. Fig. 6 illustrates a contact surface (equivalent to lower surfaces of the separate pieces 10c) between the concave portion 30b of the lower flange 30 and the separate pieces 10c with halftone dots. It should be noted that the number of the separate pieces 10c may be increased or decreased by increasing or decreasing the number of cuts, and a greater number of cuts causes an increase in the number of separate pieces 10c and a decrease in the area of each.

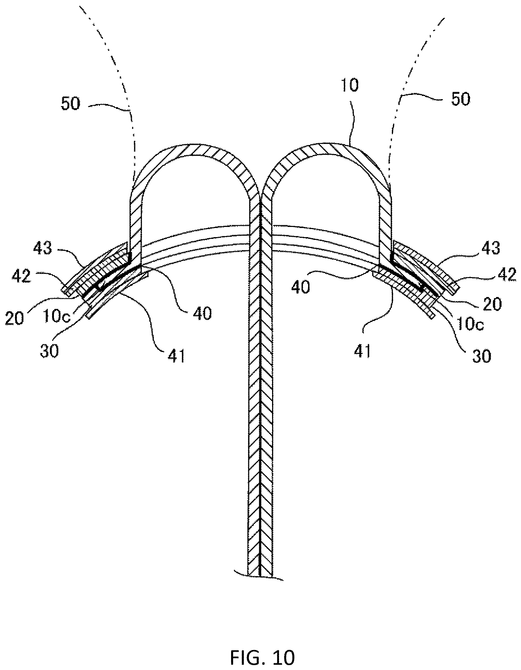

The inner side surface of the upper flange 20 is curved with the same curvature as an outer surface of the lower flange 30, and as illustrated in Fig. 10, is attached to the lower flange 30 in full contact to sandwich the separate pieces 10c of the tubular resin absorbing material 10 between the upper flange 20 and the lower flange 30.

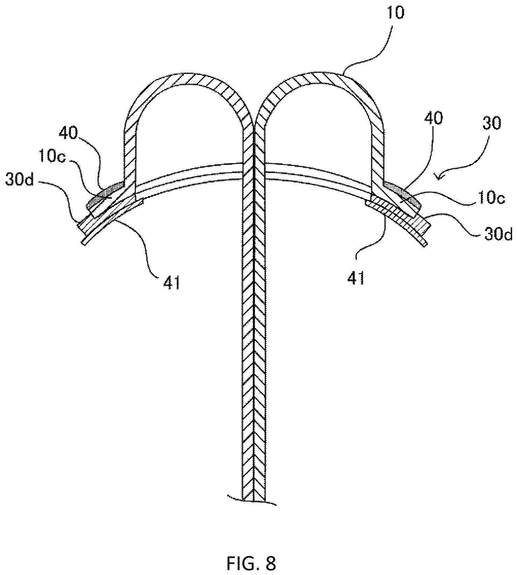

On the concave portion 30b of the lower flange 30 in which the separate pieces 10c of the tubular resin absorbing material 10 are arranged, an adhesive 40, such as a thermosetting resin, is applied (Fig. 8).

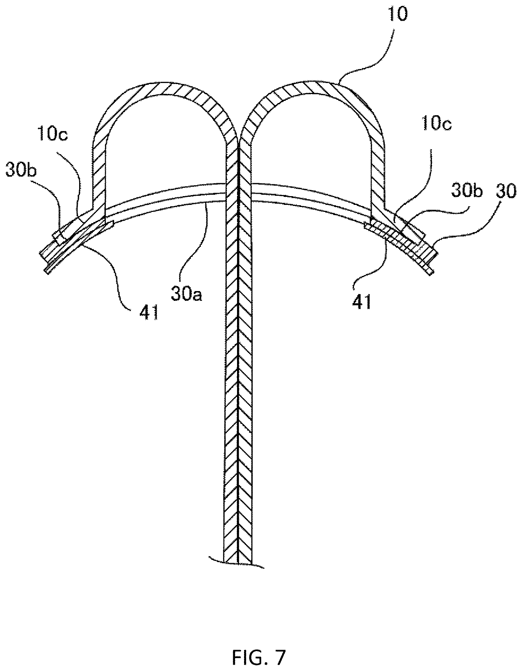

The concave portion 30b of the lower flange 30 has a depth t4 smaller than the thickness t1 of the separate pieces 10c of the tubular resin absorbing material 10, and as illustrated in Fig. 7, when the separate pieces 10c are arranged in the concave portion 30b of the lower flange 30, the separate pieces 10c project above the outer surface of the lower flange 30 beyond the concave portion 30b.

As illustrated in Fig. 10, when the upper flange 20 is attached to the lower flange 30 in full contact, the separate pieces 10c of the tubular resin absorbing material 10 projecting above beyond the outer surface of the lower flange 30 are compressed to cause the thickness t1 to be the thickness corresponding to the depth t4 of the concave portion 30b and to cause the adhesive 40 in the separate pieces 10c to flow out. The upper flange 20 and the lower flange 30 are firmly bonded to the separate pieces 10c of the tubular resin absorbing material 10 with the adhesive 40.

With reference to Figs. 7 through 10, a description is given below to the steps of bonding the upper flange 20 and the lower flange 30 to the separate pieces 10c of the tubular resin absorbing material 10 to prepare the lateral pipe lining material. It should be noted that Figs. 7 through 10 are the diagrams equivalent to the cross section taken along line E-E in Fig. 6 where each member is illustrated in a reduced or enlarged scale for ease of understanding.

As illustrated in Fig. 1, while the tubular resin absorbing material 10 is not yet impregnated with a curing resin, the distal end portion 10a is reversed by being folded outward and the distal end portion 10a is cut into the direction where the tubular resin absorbing material 10 extends to form the plurality of separate pieces 10c separated in a petal-like arrangement in the distal end portion 10a.

As illustrated in Fig. 7, the lower flange 30 is placed on a lower stainless-steel frame 41. While the tubular resin absorbing material 10 is expanded in a columnar shape, the distal end portion 10a is fit over the opening 30a of the lower flange 30. Subsequently, the separate pieces 10c of the tubular resin absorbing material 10 are arranged to locate them uniformly over the entire periphery of the concave portion 30b of the lower flange 30 (Fig. 6). Since the tubular resin absorbing material 10 is flexible, the unfolded lower portion of the tubular resin absorbing material 10 is in the flat state.

Subsequently, as illustrated in Fig. 8, the adhesive 40 is applied on the area of the concave portion 30b of the lower flange 30 and the separate pieces 10c of the tubular resin absorbing material 10 arranged there. Examples of the adhesive 40 allowed to be used include a thermosetting resin, such as an epoxy resin. Since the tubular resin absorbing material 10 is made of a nonwoven fabric, the applied adhesive 40 is absorbed by the separate pieces 10c of the tubular resin absorbing material 10 for impregnation. It should be noted that the adhesive 40 may be applied on not only the concave portion 30b of the lower flange 30 but also its peripheral portion 30d. In addition, the amount and area to apply the adhesive 40 are increased or decreased in accordance with the strength expected to the bonding between the upper flange 20, the lower flange 30, and the separate pieces 10c.

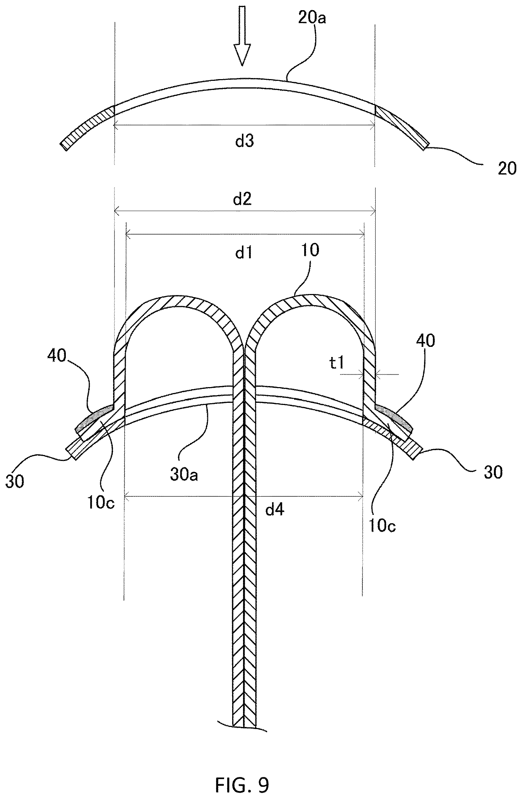

When the application of the adhesive 40 is finished, as illustrated in Fig. 9, the upper flange 20 is attached to the lower flange 30. Since the diameter d3 of the opening 20a of the upper flange 20 is same as or slightly larger than the outer diameter d2 of the tubular resin absorbing material 10, pressing the upper flange 20 downward as illustrated by the arrow causes the tubular resin absorbing material 10 to be fit in the opening 20a of the upper flange 20.

When the upper flange 20 is placed on the lower flange 30 and the separate pieces 10c, as illustrated in Fig. 10, a curved ring-shaped upper stainless-steel frame 42 is placed on the upper flange 20. The upper flange 20 and the lower flange 30 are fastened by G clamps (not shown) and the like, and the upper flange 20 is attached to the lower flange 30 in full contact. It should be noted that, as illustrated in Fig. 9, the diameter d4 of the opening 30 of the lower flange 30 is preferably same as or slightly larger than the inner diameter d1 of the tubular resin absorbing material 10, and thus the diameter difference d3-d4 between the opening 20a of the upper flange 20 and the opening 30a of the lower flange 30 is approximately twice the thickness t1 of the tubular resin absorbing material 10.

The separate pieces 10c of the tubular resin absorbing material 10 project above the outer surface of the lower flange 30 (Fig. 7), and when the upper flange 20 and the lower flange 30 are fastened, the separate pieces 10c are compressed to the thickness corresponding to the depth t4 of the concave portion 30b as illustrated in Fig. 10. Thus, the adhesive 40 impregnated into the separate pieces 10c is squeezed out and spread out into a wide range including the gap between the upper flange 20 and the lower flange 30 and the gaps between the separate pieces 10c.

In the case of the adhesive 40 as a thermosetting resin, the area on which the adhesive 40 is applied is heated by a rubber heater 43 and the like for a predetermined time, thereby curing the separate pieces 10c and also firmly bonding the upper flange 20 and the lower flange 30 to the separate pieces 10c. Then, the upper and lower stainless-steel frames 41 and 42 and the rubber heater 43 are removed to prepare the lateral pipe lining material in which the upper flange 20, the lower flange 30, and the tubular resin absorbing material 10 are integrated. Fig. 10 illustrates the area to be adhered with the adhesive 40 with thick lines.

After the upper flange 20 and the lower flange 30 are bonded to the separate pieces 10c, the tubular resin absorbing material 10 is impregnated with liquid uncured thermosetting resin and/or photocurable resin. The impregnation with the curing resin is performed by a known method in which, for example, a resin is injected from above into a flexible plastic film tube 50 for resin impregnation (illustrated by imaginary lines in Fig. 10) attached to the folded area of the tubular resin absorbing material 10 and the tube 50 is reversed inside by compressed air and the like to be press fit into the tubular resin absorbing material 10.

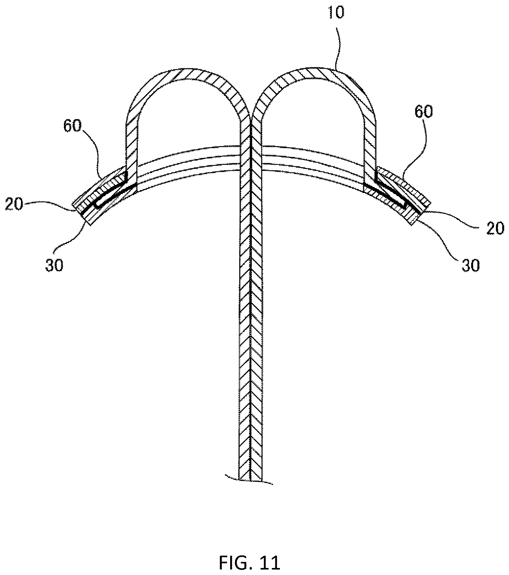

Fig. 11 illustrates an embodiment in which a ring-shaped sealing material made of butyl rubber and the like is adhered with the adhesive to the outer surface of the upper flange 20 except the opening 20a. Since the upper flange 20 is smooth and the outer surface has no unevenness, it is possible to smoothly attach the sealing material. Thus, when the lateral pipe lining material is attached to the periphery of the lateral pipe opening, the full contact properties of the lateral pipe lining material to the periphery of the lateral pipe opening are improved.

### Reference Signs List

- 10: Tubular Resin Absorbing Material
- 10c: Separate Piece
- 20: Upper Flange
- 20a: Opening
- 30: Lower Flange
- 30a: Opening
- 30b: Concave Portion
- 40: Adhesive
- 60: Sealing Material

## Claims

1. A tubular lateral pipe lining material to be inserted into a lateral pipe through a lateral pipe opening in a main pipe, comprising:
a tubular resin absorbing material being capable of being impregnated with a curing resin and having one end folded outward, the one end having a distal end portion provided with a plurality of separate pieces separated in a petal-like arrangement;
a first curved flange made of a thermoplastic resin provided with an opening formed in a central area to fit the tubular resin absorbing material and with a ring-shaped concave portion provided at an outer edge of the opening to arrange the separate pieces; and
a second flange made of a thermoplastic resin provided with an opening formed in a central area to fit the tubular resin absorbing material and having an inner side surface curved to closely contact an outer surface of the first flange, wherein
the second flange is attached to the first flange in full contact to sandwich the separate pieces of the tubular resin absorbing material arranged in the concave portion of the first flange, and the first and second flanges are bonded to the separate pieces with an adhesive applied on the concave portion of the first flange in which the separate pieces of the tubular resin absorbing material are arranged.

2. The lateral pipe lining material according to Claim 1, wherein the second flange has an outer surface curved to allow full contact with periphery of the lateral pipe opening, and a ring-shaped sealing material is attached to the outer surface of the second flange except the opening.

3. The lateral pipe lining material according to Claim 1, wherein the concave portion of the first flange has a depth smaller than a thickness of each separate piece of the tubular resin absorbing material, and when the second flange is attached to the first flange, the separate pieces arranged in the concave portion of the first flange are compressed to cause the adhesive in the separate pieces to flow out.

4. The lateral pipe lining material according to Claim 1, wherein the first and second flanges are prepared with vinyl chloride.

5. The lateral pipe lining material according to Claim 1, wherein the adhesive is made of a thermosetting resin.

6. A method of producing a tubular lateral pipe lining material to be inserted into a lateral pipe through a lateral pipe opening in a main pipe, the method comprising the steps of:
forming a plurality of separate pieces separated in a petal-like arrangement by folding outward one end of a tubular resin absorbing material and cutting into a distal end portion of the one end;
fitting the tubular resin absorbing material into an opening formed in a central area of a curved first flange made of a thermoplastic resin and also arranging the separate pieces of the tubular resin absorbing material in a ring-shaped concave portion formed at an outer edge of the opening;
applying an adhesive on the concave portion of the first flange in which the separate pieces are arranged;
sandwiching the separate pieces of the tubular resin absorbing material between the first and second flanges by fitting the tubular resin absorbing material into an opening formed in a central area of a second flange made of a thermoplastic resin and having an inner side surface curved to closely contact an outer surface of the first flange and also by attaching the second flange to the first flange in full contact; and
bonding the first and second flanges to the separate pieces with the adhesive.

7. The method of producing a lateral pipe lining material according to Claim 6, wherein the second flange has an outer surface curved to allow full contact with periphery of the lateral pipe opening, and a ring-shaped sealing material is attached to the outer surface of the second flange except the opening.

8. The method of producing a lateral pipe lining material according to Claim 6, wherein the concave portion of the first flange has a depth smaller than a thickness of each separate piece of the tubular resin absorbing material, and when the second flange is attached to the first flange, the separate pieces arranged in the concave portion of the first flange are compressed to cause the adhesive in the separate pieces to flow out.

9. The method of producing a lateral pipe lining material according to Claim 6, wherein the first and second flanges are prepared with vinyl chloride.

10. The method of producing a lateral pipe lining material according to Claim 6, wherein the adhesive is made of a thermosetting resin.
